(19)

Europäisches Patentamt
European Patent Office
Office européen des brevets

(11) **EP 4 557 129 A2**

(12) **EUROPEAN PATENT APPLICATION**

(43) Date of publication:
**21.05.2025 Bulletin 2025/21**

(51) International Patent Classification (IPC):
**G06F 17/16** (2006.01)

(21) Application number: **25162272.6**

(22) Date of filing: **07.03.2025**

(52) Cooperative Patent Classification (CPC):
**G06F 17/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.03.2024 CN 202410275582**

(71) Applicant: **KunlunXin Technology (Beijing) Company Limited**
**Haidian District**
**Beijing 100101 (CN)**

(72) Inventors:
• **GAO, Daheng**
 **Beijing, 100101 (CN)**
• **HE, Yanguang**
 **Beijing, 100101 (CN)**
• **FENG, Chen**
 **Beijing, 100101 (CN)**
• **LI, Yupeng**
 **Beijing, 100101 (CN)**

(74) Representative: **Zimmermann, Tankred Klaus**
**Schoppe, Zimmermann, Stöckeler**
**Zinkler, Schenk & Partner mbB**
**Patentanwälte**
**Radlkoferstrasse 2**
**81373 München (DE)**

(54) **METHOD AND APPARATUS FOR PROCESSING MATRIX MULTIPLICATION DATA, ELECTRONIC DEVICE AND STORAGE MEDIUM**

(57) The present disclosure provides a method for processing matrix multiplication data, relates to a field of artificial intelligence technology, and in particular to a field of chip technology. The method includes: determining a first target sub-shape information of each of the I matrix combinations according to a shape information of the second matrix of each of the I matrix combinations and a capacity of the second storage space of each of the I matrix combinations; determining a second target sub-shape information of each of the I matrix combinations according to a capacity of the first storage space of each of the I matrix combinations and the first target sub-shape information of each of the I matrix combinations; determining a target splitting information of each of the I matrix combinations according to the second target sub-shape information of each of the I matrix combinations; and determining a target matrix combination from the I matrix combinations according to a bandwidth information of a computing unit that performs the matrix multiplication operation and the target splitting information of each of the I matrix combinations. The present disclosure further provides an apparatus for processing matrix multiplication data, an electronic device, and a storage medium.

200

| I matrix combinations are determined from a plurality of matrices corresponding to the matrix multiplication operation | S210 |

| A first target sub-shape information of each of the I matrix combinations is determined according to a shape information of the second matrix of each of the I matrix combinations and a capacity of the second storage space of each of the I matrix combinations | S220 |

| A second target sub-shape information of each of the I matrix combinations is determined according to a capacity of the first storage space of each of the I matrix combinations and the first target sub-shape information of each of the I matrix combinations | S230 |

| A target splitting information of each of the I matrix combinations is determined according to the second target sub-shape information of each of the I matrix combinations and a shape information of the first matrix of each of the I matrix combinations | S240 |

| The target matrix combination is determined from the I matrix combinations according to the bandwidth information of the computing unit that performs the matrix multiplication operation and the target splitting information of each of the I matrix combinations | S250 |

FIG. 2

EP 4 557 129 A2

**Description**

TECHNICAL FIELD

The present disclosure relates to a field of artificial intelligence technology, and in particular, to a field of chip technology. More specifically, the present disclosure provides a method and an apparatus for processing matrix multiplication data, an electronic device, and a storage medium.

BACKGROUND

With the development of artificial intelligence technology, the operators of deep learning models may be adjusted according to the hardware resources of artificial intelligence chips.

SUMMARY

The present disclosure provides a method and an apparatus for processing data, an electronic device, and a storage medium.

According to another aspect of the present disclosure, a method for processing matrix multiplication data is provided, including: determining I matrix combinations from a plurality of matrices corresponding to a matrix multiplication operation, wherein each of the I matrix combinations includes a first matrix and a second matrix, the first matrix corresponds to a first storage space, the second matrix corresponds to a second storage space, and I is an integer greater than or equal to 1; determining a first target sub-shape information of each of the I matrix combinations according to a shape information of the second matrix of each of the I matrix combinations and a capacity of the second storage space of each of the I matrix combinations, wherein the first target sub-shape information is related to the first matrix and the second matrix; determining a second target sub-shape information of each of the I matrix combinations according to a capacity of the first storage space of each of the I matrix combinations and the first target sub-shape information of each of the I matrix combinations, wherein the second target sub-shape information is related to the first matrix and a third matrix, and the third matrix corresponds to the matrix multiplication operation; determining a target splitting information of each of the I matrix combinations according to the second target sub-shape information of each of the I matrix combinations and a shape information of the first matrix of each of the I matrix combinations; and determining a target matrix combination from the I matrix combinations according to a bandwidth information of a computing unit that performs the matrix multiplication operation and the target splitting information of each of the I matrix combinations, wherein a memory access resource overhead corresponding to the target matrix combination satisfies a preset memory access resource overhead condition.

According to another aspect of the present disclosure, an apparatus for processing matrix multiplication data is provided, including: a first determination module configured to determine I matrix combinations from a plurality of matrices corresponding to a matrix multiplication operation, wherein each of the I matrix combinations includes a first matrix and a second matrix, the first matrix corresponds to a first storage space, the second matrix corresponds to a second storage space, and I is an integer greater than or equal to 1; a second determination module configured to determine a first target sub-shape information of each of the I matrix combinations according to a shape information of the second matrix of each of the I matrix combinations and a capacity of the second storage space of each of the I matrix combinations, wherein the first target sub-shape information is related to the first matrix and the second matrix; a third determination module configured to determine a second target sub-shape information of each of the I matrix combinations according to a capacity of the first storage space of each of the I matrix combinations and the first target sub-shape information of each of the I matrix combinations, wherein the second target sub-shape information is related to the first matrix and a third matrix, and the third matrix corresponds to the matrix multiplication operation; a fourth determination module configured to determine a target splitting information of each of the I matrix combinations according to the second target sub-shape information of each of the I matrix combinations and a shape information of the first matrix of each of the I matrix combinations; and a fifth determination module configured to determine a target matrix combination from the I matrix combinations according to a bandwidth information of a computing unit that performs the matrix multiplication operation and the target splitting information of each of the I matrix combinations, wherein a memory access resource overhead corresponding to the target matrix combination satisfies a preset memory access resource overhead condition.

According to another aspect of the present disclosure, an electronic device is provided, including the apparatus for processing matrix multiplication data provided by the present disclosure.

According to another aspect of the present disclosure, an electronic device is provided, including: at least one processor; and a memory communicatively connected with the at least one processor; where the memory stores instructions executable by the at least one processor, and the instructions, when executed by the at least one processor, cause the at least one processor to perform the method provided by the present disclosure.

According to another aspect of the present disclosure, a non-transitory computer-readable storage medium storing computer instructions is provided, where the computer instructions are configured to cause a computer to perform the method provided by the present disclosure.

According to another aspect of the present disclosure, a computer program product including a computer program is provided, where the computer program, when executed by a processor, implements the method provided by the present disclosure.

It should be understood that the content described in this section is not intended to identify key or important features of the embodiments of the present disclosure, nor is it intended to limit the scope of the present disclosure. Other features of the present disclosure will be easily understood through the following description.

## BRIEF DESCRIPTION OF THE DRAWINGS

The drawings are used to better understand the solutions, and do not constitute a limitation to the present disclosure. In the drawings:

FIG. 1 is a schematic diagram of memory access of a plurality of matrices related to matrix multiplication operations according to an embodiment of the present disclosure;
FIG. 2 is a schematic flow chart of a method for processing matrix multiplication data according to an embodiment of the present disclosure;
FIG. 3A is a schematic diagram of matrix multiplication data according to an embodiment of the present disclosure;
FIG. 3B is a schematic diagram of a plurality of sub-matrices according to an embodiment of the present disclosure;
FIG. 4 is a schematic block diagram of an apparatus for processing matrix multiplication data according to an embodiment of the present disclosure;
FIG. 5 is a schematic diagram of an electronic device according to an embodiment of the present disclosure; and
FIG. 6 is a block diagram of an electronic device in which a method for processing matrix multiplication data may be applied according to an embodiment of the present disclosure.

## DETAILED DESCRIPTION OF EMBODIMENTS

Hereinafter, exemplary embodiments of the present disclosure will be described with reference to the drawings, which include various details of the embodiments of the present disclosure to aid in understanding, and the embodiments should be regarded as exemplary only. Therefore, those skilled in the art should recognize that various changes and modifications may be made to the embodiments described herein without departing from the scope and spirit of the disclosure. Similarly, for clarity and conciseness, descriptions of well-known functions and structures have been omitted in the following description.

In the fields of scientific computing and deep learning, a large number of linear filtering operations may be used, and the corresponding operator is the General Matrix Multiplication (GEMM) operator. In the operations related to deep learning models, the general matrix multiplication operator is time-consuming. The general matrix multiplication operator is a memory-intensive operator. If the memory access utilization rate is improved, the execution efficiency of the general matrix multiplication operator may be improved, which also helps to improve the performance of related artificial intelligence chips.

The general matrix multiplication operator may be related to the multiplicand matrix A, the multiplier matrix B and the result matrix C. The calculation process of the general matrix multiplication operator can be implemented as:

$$C = A \times B \qquad\qquad\qquad (\text{equation } 1)$$

The shape of the multiplicand matrix A may be m×k, the shape of the multiplier matrix B may be k×n, and the shape of the result matrix C may be m×n. The multiplicand matrix A and the multiplier matrix B may be used as two input matrices of the general matrix multiplication operator respectively. m is an integer greater than or equal to 1, n is an integer greater than or equal to 1, and k is an integer greater than or equal to 1.

In some embodiments, any matrix or any two matrices in the two input matrices and the result matrix may be decomposed based on the capacity of the first-level cache unit (Level 1 Cache, L1 cache) to obtain a plurality of sub-matrices.

For example, the multiplicand matrix A may be decomposed into a plurality of sub-matrices based on the capacity of the first-level cache unit for the multiplicand matrix A. The data volume of each sub-matrix may be consistent with the capacity of the first-level cache unit for the multiplicand matrix A. The shape of the sub-matrix may be l_m×l_k. l_m may be greater than or equal to 1 and less than or equal to m, and l_k may be greater than or equal to 1 and less than or equal to k.

Therefore, in the row dimension, the number $t_m$ of decompositions of the multiplicand matrix A may be:

$$t_m = \left\lceil \frac{m}{l\_m} \right\rceil \qquad \text{(equation 1)}$$

In the column dimension, the number $t_k$ of decompositions of the multiplicand matrix A may be:

$$t_k = \left\lceil \frac{k}{l\_k} \right\rceil \qquad \text{(equation 2)}$$

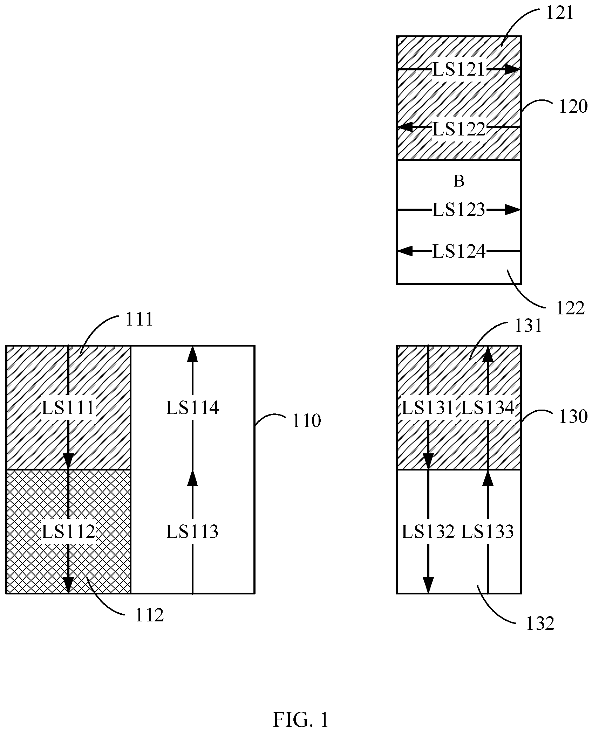

The following will be further described in conjunction with FIG. 1.

FIG. 1 is a schematic diagram of memory access of a plurality of matrices related to a matrix multiplication operation according to an embodiment of the present disclosure.

As shown in FIG. 1, the multiplicand matrix 110 may be decomposed into 4 sub-matrices. The shape of the sub-matrix 111 of the multiplicand matrix 110 may be, for example, l_m×l_k. The multiplicand matrix 110 may be the multiplicand matrix A mentioned above. The multiplier matrix 120 may be decomposed into two sub-matrices. The shape of the sub-matrix 121 of the multiplier matrix 120 may be l_m×n. When performing a matrix multiplication operation, the shape of each matrix multiplication operation performed may be [l_m, n, l_k]. After performing $t_m*t_k$ times of matrix multiplication operations, the matrix multiplication operation may be completed.

It should be understood that in the embodiment shown in FIG. 1, when determining the shape of the sub-matrix 121 of the multiplier matrix 120, the sub-matrix 111 is taken into account, but the capacity of the first-level cache unit for the multiplier matrix 120 is not taken into account. That is, the data volume of sub-matrix 121 may be greater than the capacity of the first-level cache unit of multiplier matrix 120. Therefore, in order to perform the matrix multiplication operation, repeated memory access will be caused for the sub-matrix 121.

In the case of decomposing the multiplicand matrix 110 based on the capacity of the first-level cache unit for the multiplicand matrix 110, as shown in FIG. 1, during the first memory access LS111, the second memory access LS112, the third memory access LS113 and the fourth memory access LS114, the sub-matrix of the multiplicand matrix 110 may not be repeatedly accessed. Therefore, the memory access amount indication value LS_A of the multiplicand matrix 110 may be:

$$LS\_A = m * k \qquad \text{(equation 3)}$$

The multiplier matrix 120 may be repeatedly accessed $t_m$-1 times. When the row of the sub-matrix of the multiplicand matrix 110 changes, the data in the first-level cache unit for the multiplier matrix 120 may be reused to reduce the memory access amount. As shown in FIG. 1, during the first memory access LS111 and the second memory access LS112, part of the data of the sub-matrix 121 may be reused. During the third memory access LS113 and the fourth memory access L114, part of the data of the sub-matrix 122 may be reused. Therefore, the memory access amount indication value LS_B of the multiplier matrix 120 may be:

$$LS\_B = k * n + (t_m - 1) * max(n * l\_k - l1b\_size, 0) \qquad \text{(equation 4)}$$

*l1b_size* may be the capacity of the first-level cache unit for the multiplier matrix 120. *max*() may be a function that takes the maximum value.

The result matrix 130 may be repeatedly accessed $t_k$-1 times. When the column of the sub-matrix of the multiplicand matrix 110 changes, the data in the first-level cache unit for the result matrix 130 may be reused to reduce the amount of memory access. As shown in FIG. 1, during the second memory access LS132 and the third memory access L133, part of the data related to the sub-matrix 132 may be reused. Therefore, the memory access indication value LS_C of the result matrix 130 may be:

$$LS\_C = m * n + (t_k - 1) * max(m * n - l1c\_size, 0) \qquad \text{(equation 5)}$$

*l1c_size* may be the capacity of the first-level cache unit for the result matrix 130.

It should be understood that the multiplicand matrix A is decomposed based on the capacity of the first-level cache unit for the multiplicand matrix A, and the multiplier matrix is decomposed based on the sub-matrix of the multiplicand matrix A. However, in some embodiments, the first matrix may be decomposed using the capacity of the first-level cache unit of the first matrix, and then the second matrix may be decomposed using the sub-matrix of the first matrix. The first matrix may be any matrix among the multiplicand matrix A, the multiplier matrix B and the result matrix C. The second matrix may be any matrix other than the first matrix.

By using different matrices as the first matrix and the second matrix, the sum of a plurality of memory access indication values may be determined. According to the matrix decomposition method corresponding to the minimum sum of memory access indication values, memory access resources may be saved. However, if different matrices are used as the first matrices and the matrix decomposition is performed according to the capacity of the first-level cache unit of the first matrix, the decomposition method will increase with the increase of the matrix shape, and a large number of memory access indication values need to be calculated, and a large number of sums of memory access indication values also need to be calculated, which results in large computing resource overhead and high time cost.

Based on this, in order to further improve the efficiency of matrix multiplication operation, the present disclosure provides a method for processing matrix multiplication data, which will be described below.

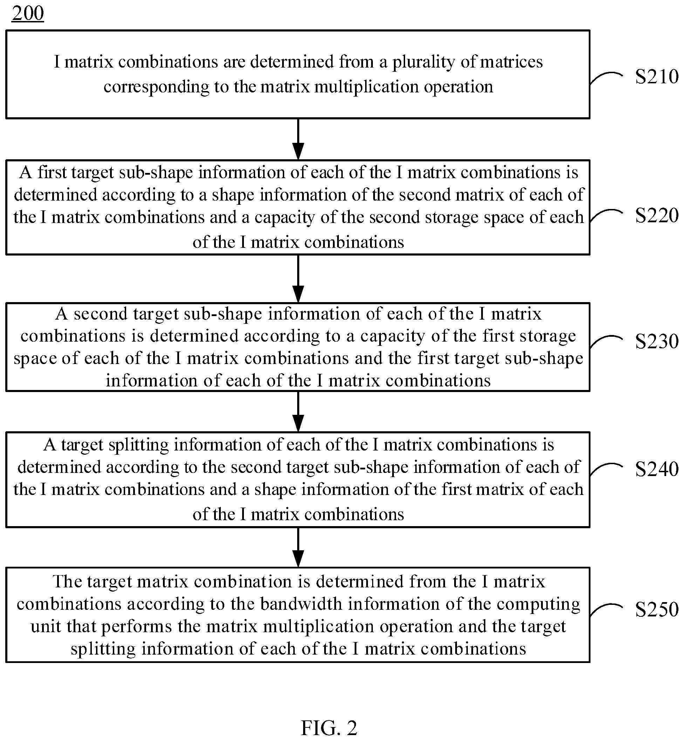

FIG. 2 is a schematic flow chart of a method for processing matrix multiplication data according to an embodiment of the present disclosure.

As shown in FIG. 2, the method 200 may include operations S210 to S250.

In operation S210, I matrix combinations are determined from a plurality of matrices corresponding to the matrix multiplication operation.

In the embodiments of the present disclosure, each matrix combination in I matrix combinations may include a first matrix and a second matrix. I may be an integer greater than or equal to 1. For example, if the plurality of matrices are 3 matrices, I may be 6. It is understood that the number of matrices being 3 is only an example. The plurality of matrices may also be 2, 4 or more matrices. For another example, the three matrices may be the multiplicand matrix A, the multiplier matrix B and the result matrix C, respectively. For another example, for the first matrix combination in I matrix combinations, the first matrix may be the multiplicand matrix A, and the second matrix may be the multiplier matrix B. The second matrix combination may be the multiplicand matrix A, and the second matrix may be the result matrix C. The following will be described in conjunction with the first matrix combination.

In the embodiments of the present disclosure, the first matrix may correspond to the first storage space, and the second matrix may correspond to the second storage space. For example, if the first matrix is the multiplicand matrix A, the first storage space may be the first-level cache unit for the multiplicand matrix A. If the second matrix is the multiplier matrix B, the second storage space may be the first-level cache unit for the multiplier matrix B.

In operation S220, a first target sub-shape information of each of the I matrix combinations is determined according to a shape information of the second matrix of each of the I matrix combinations and a capacity of the second storage space of each of the I matrix combinations.

In the embodiments of the present disclosure, the first target sub-shape information is related to the first matrix and the second matrix. For example, the shape information of the second matrix may include the shape of the second matrix. Taking the first matrix combination as an example, the shape of the first matrix may be m×k, and the shape of the second matrix may be k×n. The first target sub-shape information may be related to k. Taking the second matrix combination as an example, the shape of the first matrix may be m×k, and the shape of the second matrix (the above result matrix C) may be m×n. The first target sub-shape information may be related to m.

In the embodiments of the present disclosure, the first target sub-shape information may be determined based on the sub-shape information of the second matrix that is independent of the first matrix. For example, taking the first matrix combination as an example, the sub-shape information of the second matrix includes an initial sub-shape value n that is independent of the first matrix. The first target sub-shape information may be determined based on the initial sub-shape value n and the capacity of the second storage space.

In the embodiments of the present disclosure, based on the first target sub-shape information, the data volume of the sub-matrix of the second matrix may be less than or equal to the capacity of the second storage space. For example, for each matrix combination, the data volume of the sub-matrix of the second matrix may be equal to the capacity of the second storage space.

In operation S230, a second target sub-shape information of each of the I matrix combinations is determined according to a capacity of the first storage space of each of the I matrix combinations and the first target sub-shape information of each of the I matrix combinations.

In the embodiments of the present disclosure, the second target sub-shape information is related to the first matrix and the third matrix, and the third matrix corresponds to the matrix multiplication operation. For example, taking the first matrix combination as an example, the third matrix may be the result matrix C. The second target sub-shape information may be related to m. The second target sub-shape information of the first matrix combination may be determined according to the first target shape sub-information of the first matrix combination and the capacity of the first storage space.

In operation S240, a target splitting information of each of the I matrix combinations is determined according to the second target sub-shape information of each of the I matrix combinations and a shape information of the first matrix of each of the I matrix combinations.

In the embodiments of the present disclosure, the target splitting information may indicate: the number of splits of the first matrix in a dimension that is independent of the second matrix. For example, taking the first matrix combination as an example, the row dimension of the first matrix is independent of the second matrix, and the target splitting information of the first matrix combination may indicate the number of splits of the first matrix in the row dimension.

In operation S250, the target matrix combination is determined from the I matrix combinations according to the bandwidth information of the computing unit that performs the matrix multiplication operation and the target splitting information of each of the I matrix combinations.

In the embodiments of the present disclosure, the memory access resource overhead corresponding to the target matrix combination satisfies the preset memory access resource overhead condition. For example, the data volume of the input sub-matrices of the two input matrices in each matrix combination may be determined according to the target splitting information of each of the I matrix combinations. The memory access resource overhead of each matrix combination may be determined according to the bandwidth information of the computing unit and the data volume of the input sub-matrix of each matrix combination. The memory access resource overhead condition may be: the memory access resource overhead is less than or equal to the preset memory access resource overhead threshold.

Through the embodiments of the present disclosure, the splitting method of the first matrix is determined according to the capacity of the second storage space, which may reduce the computing resources required to determine the target matrix combination, and may also effectively reduce the memory access amount, especially may avoid the sub-matrix of the first matrix and the sub-matrix of the second matrix from being repeatedly accessed, which helps to improve the execution efficiency of the matrix multiplication operator, thereby improving the efficiency of the data processing device.

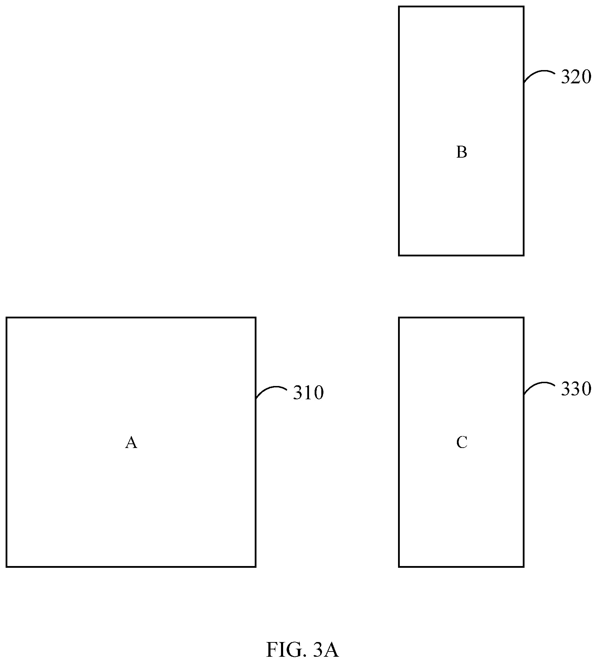

It should be understood that the method of the present disclosure is described above, and the method of the present disclosure will be further described below in conjunction with FIG. 3A to FIG. 3B.

FIG. 3A is a schematic diagram of matrix multiplication data according to an embodiment of the present disclosure.

As shown in FIG. 3A, the matrix multiplication data may include a multiplicand matrix 310, a multiplier matrix 320, and a result matrix 330. The shape of the multiplicand matrix 310 may be m×k, the shape of the multiplier matrix 320 may be k×n, and the shape of the result matrix 330 may be m×n.

In some embodiments, in some implementations of the above operation S210, the I matrix combinations may further include a third matrix combination, a fourth matrix combination, a fifth matrix combination, and a sixth matrix combination. For the third matrix combination, the first matrix may be the multiplier matrix 320, and the second matrix may be the multiplicand matrix 310. For the fourth matrix combination, the first matrix may be the multiplier matrix 320, and the second matrix may be the result matrix 330. For the fifth matrix combination, the first matrix may be the result matrix 330, and the second matrix may be the multiplicand matrix 310. For the sixth matrix combination, the first matrix may be the result matrix 330, and the second matrix may be the multiplier matrix 320.

In the embodiments of the present disclosure, the shape information of the first matrix includes a first initial sub-shape value that is independent of the second matrix, and the shape information of the second matrix includes a second initial sub-shape value that is independent of the first matrix. For example, taking the first matrix as the multiplicand matrix 310 and the second matrix as the multiplier matrix 320 as an example, the first initial sub-shape value may be m, and the second initial sub-shape value may be n. In order to reduce repeated memory access to the multiplier matrix 320, referring to the above equation 4, $t_m=1$ or $n * l\_k \leq l1b\_size$ may be set. In order to reduce repeated memory access to the result matrix 330, referring to the above equation 5, $t_k=1$ may be set. However, by setting $t_m=1$ or $t_k=1$, the multiplicand matrix 310 may not be effectively split. Therefore, in order to reduce repeated memory access, $n * l\_k \leq l1b\_size$ may be set. In addition, in order to minimize repeated memory access to the result matrix 330, the value of $t_k$ should be as small as possible. That is, (referring to the above equation 2), l_k may be as large as possible. Therefore, $n * l\_k = l1b\_size$ may be set.

Based on this, in some embodiments, the first target sub-shape information includes a first target sub-shape value. In some implementations of the above operation S220, the determining a first target sub-shape information of each of the I matrix combinations according to a shape information of the second matrix of each of the I matrix combinations and a capacity of the second storage space of each of the I matrix combinations includes: determining the first target sub-shape value according to a ratio between the capacity of the second storage space and the second initial sub-shape value. Taking the first matrix as the multiplicand matrix 310 and the second matrix as the multiplier matrix 320 as an example, the first target sub-shape value large_k may be l_k in the case of $n * l\_k = l1b\_size$. For another example, the first target sub-shape value large_k of the first matrix combination may be determined by the following equation:

$$large\_k = \left\lceil \frac{l1b\_size}{n} \right\rceil \qquad (equation\ 6)$$

n may be the second initial sub-shape value.

In addition, in some embodiments, the second target sub-shape information may include a second target sub-shape value. In some implementations of the above operation S230, the determining a second target sub-shape information of each of the I matrix combinations according to a capacity of the first storage space of each of the I matrix combinations and the first target sub-shape information of each of the I matrix combinations includes: determining the second target sub-shape value according to a ratio between the capacity of the first storage space and the first target sub-shape value. For example, the second target sub-shape value large_m may be determined by the following equation:

$$large\_m = \left\lceil \frac{l1a\_size}{large\_k} \right\rceil \qquad (equation\ 7)$$

*l1a_size* may be the capacity of the first-level cache unit for the multiplicand matrix 310.

Next, in some implementations of the above operation S240, the determining a target splitting information of each of the I matrix combinations according to the second target sub-shape information of each of the I matrix combinations and a shape information of the first matrix of each of the I matrix combinations includes: determining the target splitting information according to a ratio between the first initial sub-shape value and the second target sub-shape value. The target splitting information may include a target splitting parameter value. The target splitting parameter value $T_m$ may be determined by the following equation:

$$T_m = \left\lceil \frac{m}{large\_m} \right\rceil \qquad (equation\ 8)$$

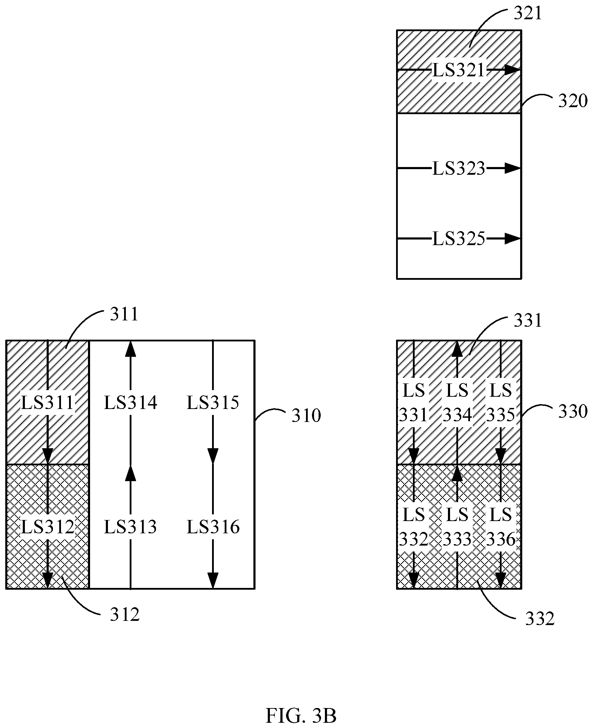

It should be understood that some ways of splitting the first matrix and the second matrix are described above, and some ways of determining the memory access resource overhead will be described below in conjunction with FIG. 3B.

FIG. 3B is a schematic diagram of a plurality of sub-matrices according to an embodiment of the present disclosure.

As shown in FIG. 3B, taking the above-mentioned first matrix combination as an example, the sub-matrix 311 of the multiplicand matrix 310 may be determined based on the above-mentioned first target sub-shape value large_k and the second target sub-shape value large_m. The multiplicand matrix 310 may be, for example, split into 6 sub-matrices. The sub-matrix 321 of the multiplier matrix 320 may be determined based on the above-mentioned second initial sub-shape value n and the first target sub-shape value large_k. The multiplier matrix 320 may include, for example, 3 sub-matrices. Thus, the result matrix 330 may include, for example, 2 sub-matrices. The shape of the sub-matrix 331 of the result matrix 330 may be large_m×n.

As shown in FIG. 3B, in the first memory access LS311, the second memory access LS312, the third memory access LS313, the fourth memory access LS314, the fifth memory access LS315 and the sixth memory access LS316 for the multiplicand matrix 310, the multiplicand matrix 310 is not repeatedly accessed. In the first memory access LS321, the second memory access LS323 and the third memory access LS325 for the multiplier matrix 320, the multiplier matrix 320 is not repeatedly accessed. In addition, in the process of performing the matrix multiplication operation, the data in the first-level cache unit for the multiplier matrix 320 is reused. For example, the sub-matrix 321 of the multiplier matrix 320 is multiplied with the sub-matrix 311 and the sub-matrix 312 of the multiplicand matrix 310, that is, the sub-matrix 321 is reused once.

As shown in FIG. 3B, the result matrix 330 needs to be repeatedly accessed. In order to determine the sub-matrix 331 of the result matrix 330, the first memory access LS331, the fourth memory access LS334, and the fifth memory access LS335 may be performed based on the global memory unit. In order to determine the sub-matrix 332 of the result matrix 330, the second memory access LS332, the third memory access LS333, and the sixth memory access LS336 may be performed based on the global memory unit. It should be understood that after the above sub-matrix 311 and the sub-matrix 321 are multiplied, a result sub-matrix may be obtained. Next, the first memory access LS331 may be performed to store the result sub-matrix from the first-level cache unit for the result matrix 330 to the global memory unit. Next, the resource overhead of memory access may be determined.

In some embodiments, in some implementations of the above operation S250, the determining a target matrix combination from the I matrix combinations according to a bandwidth information of a computing unit that performs the matrix multiplication operation and the target splitting information of each of the I matrix combinations includes:

determining a memory access resource overhead of each of the I matrix combinations according to the bandwidth information of the computing unit that performs the matrix multiplication operation and the target splitting information of each of the I matrix combinations.

In the embodiments of the present disclosure, the bandwidth information includes: the storage bandwidth between the computing unit and the storage unit. For example, the storage unit may be a global storage unit.

In the embodiments of the present disclosure, the determining a memory access resource overhead of each of the I matrix combinations according to the bandwidth information of the computing unit that performs the matrix multiplication operation and the target splitting information of each of the I matrix combinations includes: determining a first memory access time resource overhead according to a data volume of the first matrix, a data volume of the second matrix, a data volume of the third matrix and the storage bandwidth. The initial memory access time resource overhead is determined according to the target splitting information, the initial sub-data volume of the third matrix and the storage bandwidth. The initial sub-data volume may be the data volume of the third matrix stored in the global storage unit.

For example, the total data volume may be determined according to the data volume of the first matrix, the data volume of the second matrix, and the data volume of the third matrix. The first memory access time resource overhead is determined according to the ratio between the total data volume and the storage bandwidth. The memory access resource overhead of the matrix combination may be determined according to the first memory access time resource overhead and the initial memory access time resource overhead. For another example, the memory access resource overhead $total\_time(a\_m)$ of the first matrix combination may be determined by the following equation:

$$total\_time(a\_m) = \frac{m*k+n*k+m*n}{Bw} + (T_m - 1)\frac{m_g}{B_w} \qquad \text{(equation 9)}$$

Bw may be the storage bandwidth. $\frac{m*k+n*k+m*n}{Bw}$ may be the first memory access time resource overhead. $m_g$ may be the initial sub-data volume.

It should be understood that the above text, in combination with the first matrix combination, describes some ways of determining the memory access resource overhead in the present disclosure. The method of determining the memory access resource overhead based on the second matrix combination to the sixth matrix combination is the same or similar to the way of determining the memory access resource overhead based on the first matrix combination, and the present disclosure will not repeat it here.

Through the embodiments of the present disclosure, the storage bandwidth between the computing unit and the storage unit may be fully utilized, and only the third matrix may be repeatedly accessed, which reduces the number of memory access and helps to improve memory access efficiency.

It should be understood that the part of the third matrix data that needs to be repeatedly accessed is stored in the global storage unit. However, the present disclosure is not limited to this, and part of the data of the third matrix that needs to be repeatedly accessed may be stored in multi-level cache units, which will be explained below.

In some embodiments, the third matrix is stored in at least two levels of cache units of the multi-level cache units. The at least two levels of cache units include a first cache unit and a second cache unit. For example, taking the first matrix combination as an example, the first cache unit may be a first-level cache unit for the result matrix C. The second cache unit may be a second-level cache unit (Level 2 Cache, L2 Cache) associated with the first-level cache unit. It should be understood that the first cache unit may also be a zero-level cache (level 0 cache, L0 cache). In the case that the first cache unit is a zero-level cache, the second cache unit may be a first-level cache unit. For another example, at least two levels of cache units may further include a third cache unit. In the case that the first cache unit is a first-level cache unit, the third cache unit may be a third-level cache unit (Level 3 Cache, L3 Cache).

In the embodiments of the present disclosure, the bandwidth information between the computing unit and the storage unit may further include: at least one cache bandwidth between the multi-level cache units. For example, taking the first cache unit as a first-level cache unit as an example, the at least one cache bandwidth may include: the cache bandwidth $B_2$ between the second-level cache unit and the first-level cache unit and the cache bandwidth $B_3$ between the third-level cache unit and the second-level cache unit.

Next, the second memory access time resource overhead may be determined according to the target splitting information, the target sub-data volume of the third matrix and the cache bandwidth. The target sub-data volume may be the data volume of the third matrix stored in the target cache unit. For example, the target sub-data volume may be one or more. If the data volume of the third matrix is large, part of the data of the third matrix may be stored in the third-level cache unit.

In the embodiments of the present disclosure, the determining a second memory access time resource overhead according to the target splitting information, a target sub-data volume of the third matrix and the cache bandwidth includes:

determining a sub-memory access time resource overhead according to a ratio between the target sub-data volume of the third matrix and the cache bandwidth; and determining the second memory access time resource overhead according to a product between the sub-memory access time resource overhead and the target splitting parameter value. Next, unlike the above-mentioned determination of the memory access resource overhead of the matrix combination according to the first memory access time resource overhead and the initial memory access time resource overhead, the memory access resource overhead of the matrix combination may be determined according to the first memory access time resource overhead and the second memory access time resource overhead. For example, the memory access resource overhead $total\_time(A\_m)$ may be determined by the following equation:

$$total\_time(A\_m) = \frac{m*k+n*k+m*n}{Bw} + (T_m - 1)(\frac{m_{l2}}{B_2} + \frac{m_{l3}}{B_3} + \cdots + \frac{m_{lj}}{B_j})$$

(equation 10)

$m_{l2}$ is the target sub-data amount of the third matrix stored on the second cache unit, $m_{l3}$ is the target sub-data amount of the third matrix stored on the third cache unit, and $m_{lj}$ is the target sub-data amount of the third matrix stored on the j-level storage unit. j may be an integer greater than 2. It should be understood that $m_{l3}$ may be 0, and $m_{lj}$ may also be 0. It should also be understood that the j-level storage unit may be a global storage unit. $B_j$ may be the bandwidth between the j-level storage unit and the third-level storage unit.

Through the embodiments of the present disclosure, part data of the third data that is repeatedly accessed may be stored in multi-level storage units, and the bandwidth of each level of the storage unit in the multi-level storage units may be fully utilized, which further improves the efficiency of the computing unit.

It should be understood that some methods for determining the memory access resource overhead are described above, and some methods for determining the target matrix combination will be described below.

In some embodiments, in some implementations of the above operation S250, the determining the target matrix combination from I matrix combinations includes: determining the target matrix combination from I matrix combinations according to the memory access resource overhead of each of the I matrix combinations.

In the embodiments of the present disclosure, it may be determined whether the memory access resource overhead of I matrix combinations satisfies the preset memory access resource overhead condition. The preset memory access resource overhead condition includes at least one of the following: the memory access resource overhead corresponding to the target matrix combination is less than or equal to a preset memory access resource overhead threshold; or the memory access resource overhead corresponding to the target matrix combination is the smallest in the I matrix combinations. For example, the matrix combination with the smallest memory access resource overhead may be used as the target matrix combination. For another example, any matrix combination with a memory access resource overhead less than the preset memory access resource overhead threshold may also be used as the target matrix combination.

It should be understood that some methods for determining the target matrix combination are described above, and the method of the present disclosure is further described below in conjunction with the target matrix combination.

In some embodiments, the above method 200 may further include: performing the matrix multiplication operation according to the first target sub-shape information and the second target sub-shape information of the target matrix combination.

In the embodiments of the present disclosure, the third matrix may be the result matrix of the matrix multiplication operation. The method may further include the following operations. A plurality of first sub-matrices of the first matrix of the target matrix combination are determined according to the first target sub-shape information and the second target sub-shape information of the target matrix combination. A plurality of second sub-matrices of the second matrix of the target matrix combination are determined according to the first target sub-shape information of the target matrix combination. The matrix multiplication operation is performed according to the plurality of first sub-matrices and the plurality of second sub-matrices to obtain a plurality of result sub-matrices. The third matrix is obtained according to the plurality of result sub-matrices. For example, taking the above-mentioned first matrix combination as an example, a plurality of first sub-matrices may be determined from the multiplicand matrix according to the first target sub-shape value large_k and the second target sub-shape value large_m of the first matrix combination. The shape of the first sub-matrix may be large_m×large_k. A plurality of second sub-matrices may be determined from the multiplier matrix according to the first target sub-shape value large_k and the second initial sub-shape value n. The shape of the second sub-matrix may be large_k×n. Next, the first sub-matrix is multiplied by the second sub-matrix to obtain a result sub-matrix. For the plurality of result sub-matrices, addition and concatenation operations are performed to obtain a result matrix. It should be understood that the method of performing the matrix multiplication operation based on the second matrix combination is the same as or similar to the method of performing the matrix multiplication operation based on the first matrix combination, and the present disclosure will not be repeated it here.

In the embodiments of the present disclosure, the second matrix may be the result matrix of the matrix multiplication operation. The method may further include the following operations. A plurality of first sub-matrices of the first matrix of the target matrix combination are determined according to the first target sub-shape information and the second target sub-shape information of the target matrix combination. A plurality of third sub-matrices of the third matrix of the target matrix combination are determined according to the second target sub-shape information of the target matrix combination. The matrix multiplication operation is performed according to the plurality of first sub-matrices and the plurality of third sub-matrices to obtain the plurality of result sub-matrices. The second matrix is obtained according to the plurality of result sub-matrices.

In the embodiments of the present disclosure, the first matrix may be a result matrix of the matrix operation. The method may further include the following operations. A plurality of second sub-matrices of the second matrix of the target matrix combination are determined according to the first target sub-shape information of the target matrix combination. A plurality of third sub-matrices of the third matrix of the target matrix combination are determined according to the second target sub-shape information of the target matrix combination. The matrix multiplication operation is performed according to the plurality of second sub-matrices and the plurality of third sub-matrices to obtain a plurality of result sub-matrices. The first matrix is obtained according to the plurality of result sub-matrices.

It should be understood that the method of performing matrix multiplication operation based on the third matrix combination to the sixth matrix combination is the same or similar to the manner of performing matrix operation based on the first matrix combination, and the present disclosure will not be repeated here.

It should be understood that the above describes the method of processing matrix multiplication data of the present disclosure, and the following will describe the apparatus of the present disclosure.

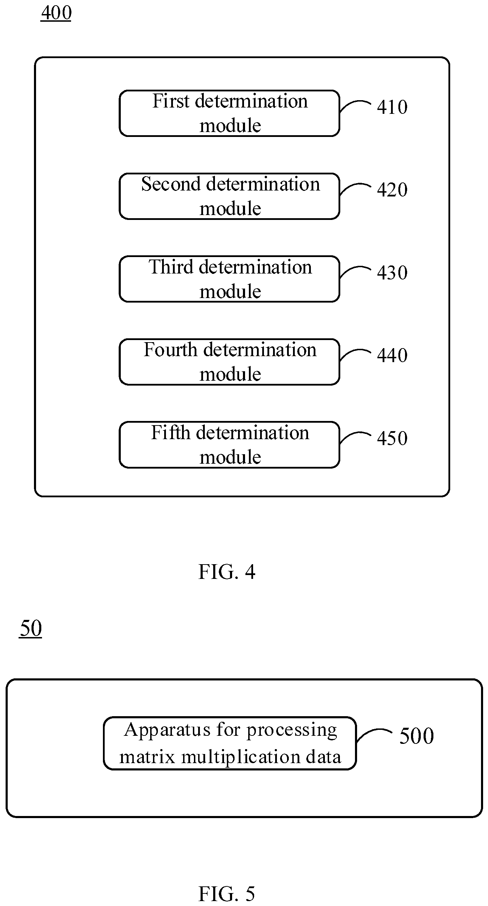

FIG. 4 is a schematic block diagram of an apparatus for processing matrix multiplication data according to an embodiment of the present disclosure.

As shown in FIG. 4, the apparatus 400 may include a first determination module 410, a second determination module 420, a third determination module 430, a fourth determination module 440 and a fifth determination module 450.

The first determination module 410 is configured to determine I matrix combinations from a plurality of matrices corresponding to a matrix multiplication operation, wherein each of the I matrix combinations includes a first matrix and a second matrix, the first matrix corresponds to a first storage space, the second matrix corresponds to a second storage space, and I is an integer greater than or equal to 1.

The second determination module 420 is configured to determine a first target sub-shape information of each of the I matrix combinations according to a shape information of the second matrix of each of the I matrix combinations and a capacity of the second storage space of each of the I matrix combinations, wherein the first target sub-shape information is related to the first matrix and the second matrix.

The third determination module 430 is configured to determine a second target sub-shape information of each of the I matrix combinations according to a capacity of the first storage space of each of the I matrix combinations and the first target sub-shape information of each of the I matrix combinations, wherein the second target sub-shape information is related to the first matrix and a third matrix, and the third matrix corresponds to the matrix multiplication operation.

The fourth determination module 440 is configured to determine a target splitting information of each of the I matrix combinations according to the second target sub-shape information of each of the I matrix combinations and a shape information of the first matrix of each of the I matrix combinations.

The fifth determination module 450 is configured to determine a target matrix combination from the I matrix combinations according to a bandwidth information of a computing unit that performs the matrix multiplication operation and the target splitting information of each of the I matrix combinations, wherein a memory access resource overhead corresponding to the target matrix combination satisfies a preset memory access resource overhead condition.

In some embodiments, the shape information of the first matrix includes a first initial sub-shape value that is independent of the second matrix, the shape information of the second matrix includes a second initial sub-shape value that is independent of the first matrix, the first target sub-shape information includes a first target sub-shape value, and the second target sub-shape information includes a second target sub-shape value.

In some embodiments, the second determination module is further configured to: determine the first target sub-shape value according to a ratio between the capacity of the second storage space and the second initial sub-shape value.

In some embodiments, the third determination module is further configured to: determine the second target sub-shape value according to a ratio between the capacity of the first storage space and the first target sub-shape value.

In some embodiments, the fourth determination module is further configured to: determine the target splitting information according to a ratio between the first initial sub-shape value and the second target sub-shape value.

In some embodiments, the third matrix is stored in at least two levels of cache units of multi-level cache units, and the at least two levels of cache units include a first cache unit and a second cache unit.

In some embodiments, the fifth determination module includes: a first second determination sub-module configured to determine a memory access resource overhead of each of the I matrix combinations according to the bandwidth information of the computing unit that performs the matrix multiplication operation and the target splitting information of each of the I matrix combinations; and a second determination sub-module configured to determine the target matrix combination from the I matrix combinations according to the memory access resource overhead of each of the I matrix combinations.

In some embodiments, the bandwidth information includes: a storage bandwidth between the computing unit and a storage unit, and at least one cache bandwidth between multi-level cache units, the first second determination sub-module includes: a first determination unit configured to determine a first memory access time resource overhead according to a data volume of the first matrix, a data volume of the second matrix, a data volume of the third matrix and the storage bandwidth; a second determination unit configured to determine a second memory access time resource overhead according to the target splitting information, a target sub-data volume of the third matrix and the cache bandwidth, wherein the target sub-data volume is a data volume of the third matrix stored in a target cache unit, and the target cache unit is a cache unit in the multi-level cache units except a first cache unit; and a third determination unit configured to determine the memory access resource overhead of each of the I matrix combinations according to the first memory access time resource overhead and the second memory access time resource overhead.

In some embodiments, the first determination unit includes: a first determination sub-unit configured to determine a total data volume according to the data volume of the first matrix, the data volume of the second matrix and the data volume of the third matrix; and a second determination sub-unit configured to determine the first memory access time resource overhead according to a ratio between the total data volume and the storage bandwidth.

In some embodiments, the target splitting information includes a target splitting parameter value. The second determination unit includes: a third determination sub-unit configured to determine a sub-memory access time resource overhead according to a ratio between the target sub-data volume of the third matrix and the cache bandwidth; and a fourth determination sub-unit configured to determine the second memory access time resource overhead according to a product between the sub-memory access time resource overhead and the target splitting parameter value.

In some embodiments, the apparatus further includes: a performing module configured to perform the matrix multiplication operation according to the first target sub-shape information of the target matrix combination and the second target sub-shape information of the target matrix combination.

In some embodiments, the preset memory access resource overhead condition includes at least one of that: the memory access resource overhead corresponding to the target matrix combination is less than or equal to a preset memory access resource overhead threshold; or the memory access resource overhead corresponding to the target matrix combination is the smallest in the I matrix combinations.

It should be understood that the above describes the apparatus of the present disclosure, and the following describes an electronic device including the apparatus.

FIG. 5 is a schematic diagram of an electronic device according to an embodiment of the present disclosure.

As shown in FIG. 5, the electronic device 50 may include an apparatus 500 for processing matrix multiplication data provided by the present disclosure. The apparatus 500 for processing matrix multiplication data may be, for example, the apparatus 400 described above.

In the technical solution of the present disclosure, the collection, storage, use, processing, transmission, provision, disclosure and application of the user personal information involved are in compliance with the provisions of relevant laws, and do not violate public order and good customs.

According to the embodiments of the present disclosure, the present disclosure also provides an electronic device, a readable storage medium and a computer program product.

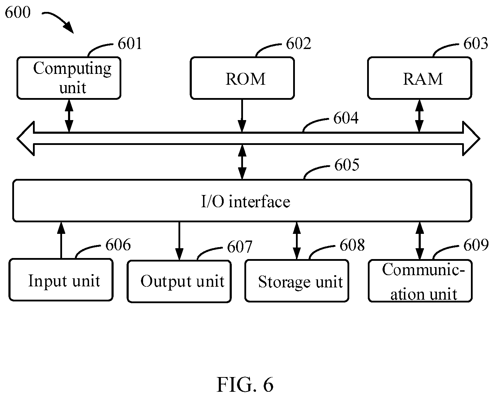

FIG. 6 shows a schematic block diagram of an example electronic device 600 used to implement the embodiments of the present disclosure. The electronic device is intended to represent various forms of digital computers, such as laptop computers, desktop computers, workstations, personal digital assistants, servers, blade servers, mainframe computers and other suitable computers. The electronic device may also represent various forms of mobile devices, such as personal digital processing, cellular phones, smart phones, wearable devices and other similar computing devices. The components shown herein, their connections and relationships, and their functions are merely examples, and are not intended to limit the implementation of the present disclosure described and/or required herein.

As shown in FIG. 6, the device 600 includes a computing unit 601, which may execute various appropriate actions and processing according to a computer program stored in a read only memory (ROM) 602 or a computer program loaded from a storage unit 608 into a random access memory (RAM) 603. Various programs and data required for the operation of the device 600 may also be stored in the RAM 603. The computing unit 601, the ROM 602 and the RAM 603 are connected to each other through a bus 604. An input/output (I/O) interface 605 is also connected to the bus 604.

The I/O interface 605 is connected to a plurality of components of the device 600, including: an input unit 606, such as a keyboard, a mouse, etc.; an output unit 607, such as various types of displays, speakers, etc.; a storage unit 608, such as a magnetic disk, an optical disk, etc.; and a communication unit 609, such as a network card, a modem, a wireless communication transceiver, etc. The communication unit 609 allows the device 600 to exchange information/data with other devices through the computer network such as the Internet and/or various telecommunication networks.

The computing unit 601 may be various general-purpose and/or special-purpose processing components with processing and computing capabilities. Some examples of computing unit 601 include, but are not limited to, central processing unit (CPU), graphics processing unit (GPU), various dedicated artificial intelligence (AI) computing chips, various processors that run machine learning model algorithms, digital signal processing DSP and any appropriate processor, controller, microcontroller, etc. The computing unit 601 executes the various methods and processes described above, such as the method of processing data. For example, in some embodiments, the method of processing data may be implemented as computer software programs, which are tangibly contained in the machine-readable medium, such as the storage unit 608. In some embodiments, part or all of the computer program may be loaded and/or installed on the device 600 via the ROM 602 and/or the communication unit 609. When the computer program is loaded into the RAM 603 and executed by the computing unit 601, one or more steps of the method of processing data described above may be executed. Alternatively, in other embodiments, the computing unit 601 may be configured to execute the method of processing data in any other suitable manner (for example, by means of firmware).

Various implementations of the systems and technologies described in the present disclosure may be implemented in digital electronic circuit systems, integrated circuit systems, field programmable gate arrays (FPGA), application specific integrated circuits (ASIC), application-specific standard products (ASSP), system-on-chip SOC, load programmable logic device (CPLD), computer hardware, firmware, software and/or their combination. The various implementations may include: being implemented in one or more computer programs, the one or more computer programs may be executed and/or interpreted on a programmable system including at least one programmable processor, the programmable processor may be a dedicated or general programmable processor. The programmable processor may receive data and instructions from a storage system, at least one input device and at least one output device, and the programmable processor transmit data and instructions to the storage system, the at least one input device and the at least one output device.

The program code used to implement the method of the present disclosure may be written in any combination of one or more programming languages. The program codes may be provided to the processors or controllers of general-purpose computers, special-purpose computers or other programmable data processing devices, so that the program code enables the functions/operations specific in the flowcharts and/or block diagrams to be implemented when the program code executed by a processor or controller. The program code may be executed entirely on the machine, partly executed on the machine, partly executed on the machine and partly executed on the remote machine as an independent software package, or entirely executed on the remote machine or server.

In the context of the present disclosure, the machine-readable medium may be a tangible medium, which may contain or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage media would include electrical connections based on one or more wires, portable computer disks, hard disks, random access memory (RAM), read only memory (ROM), erasable programmable read only memory (EPROM or flash memory), optical fiber, portable compact disk read only memory (CD-ROM), optical storage device, magnetic storage device or any suitable combination of the above-mentioned content.

In order to provide interaction with users, the systems and techniques described here may be implemented on a computer, the computer includes: a display device (for example, a CRT (cathode ray tube) or LCD (liquid crystal display) monitor) for displaying information to the user; and a keyboard and a pointing device (for example, a mouse or trackball). The user may provide input to the computer through the keyboard and the pointing device. Other types of devices may also be used to provide interaction with users. For example, the feedback provided to the user may be any form of sensory feedback (for example, visual feedback, auditory feedback or tactile feedback); and any form (including sound input, voice input, or tactile input) may be used to receive input from the user.

The systems and technologies described herein may be implemented in a computing system including back-end components (for example, as a data server), or a computing system including middleware components (for example, an application server), or a computing system including front-end components (for example, a user computer with a graphical user interface or a web browser through which the user may interact with the implementation of the system and technology described herein), or in a computing system including any combination of such back-end components, middleware components or front-end components. The components of the system may be connected to each other through any form or medium of digital data communication (for example, a communication network). Examples of communication networks include: local region network (LAN), wide region network (WAN) and the Internet.

The computer system may include a client and a server. The client and the server are generally far away from each other and usually interact through the communication network. The relationship between the client and the server is generated by computer programs that run on the respective computers and have a client-server relationship with each other.

It should be understood that the various forms of processes shown above may be used to reorder, add or delete steps. For example, the steps described in the present disclosure may be executed in parallel, sequentially or in a different order, as long as the desired result of the present disclosure may be achieved, which is not limited herein.

The above-mentioned specific implementations do not constitute a limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

**Claims**

1. A method (200) for processing matrix multiplication data, comprising:

   determining (S210) I matrix combinations from a plurality of matrices corresponding to a matrix multiplication operation, wherein each of the I matrix combinations comprises a first matrix and a second matrix, the first matrix corresponds to a first storage space, the second matrix corresponds to a second storage space, and I is an integer greater than or equal to 1;
   determining (S220) a first target sub-shape information of each of the I matrix combinations according to a shape information of the second matrix of each of the I matrix combinations and a capacity of the second storage space of each of the I matrix combinations, wherein the first target sub-shape information is related to the first matrix and the second matrix;
   determining (S230) a second target sub-shape information of each of the I matrix combinations according to a capacity of the first storage space of each of the I matrix combinations and the first target sub-shape information of each of the I matrix combinations, wherein the second target sub-shape information is related to the first matrix and a third matrix, and the third matrix corresponds to the matrix multiplication operation;
   determining (S240) a target splitting information of each of the I matrix combinations according to the second target sub-shape information of each of the I matrix combinations and a shape information of the first matrix of each of the I matrix combinations; and
   determining (S250) a target matrix combination from the I matrix combinations according to a bandwidth information of a computing unit that performs the matrix multiplication operation and the target splitting information of each of the I matrix combinations, wherein a memory access resource overhead corresponding to the target matrix combination satisfies a preset memory access resource overhead condition.

2. The method according to claim 1, wherein the shape information of the first matrix comprises a first initial sub-shape value that is independent of the second matrix, the shape information of the second matrix comprises a second initial sub-shape value that is independent of the first matrix, the first target sub-shape information comprises a first target sub-shape value, and the second target sub-shape information comprises a second target sub-shape value.

3. The method according to claim 2, wherein the determining (S220) a first target sub-shape information of each of the I matrix combinations according to a shape information of the second matrix of each of the I matrix combinations and a capacity of the second storage space of each of the I matrix combinations comprises:
   determining the first target sub-shape value according to a ratio between the capacity of the second storage space and the second initial sub-shape value.

4. The method according to claim 2, wherein the determining (S230) a second target sub-shape information of each of the I matrix combinations according to a capacity of the first storage space of each of the I matrix combinations and the first target sub-shape information of each of the I matrix combinations comprises:
   determining the second target sub-shape value according to a ratio between the capacity of the first storage space and the first target sub-shape value.

5. The method according to claim 2, wherein the determining (S240) a target splitting information of each of the I matrix combinations according to the second target sub-shape information of each of the I matrix combinations and a shape information of the first matrix of each of the I matrix combinations comprises:
   determining the target splitting information according to a ratio between the first initial sub-shape value and the second target sub-shape value.

6. The method according to any one of claims 1 to 5, wherein the third matrix is stored in at least two levels of cache units of multi-level cache units, and the at least two levels of cache units comprise a first cache unit and a second cache unit.

7. The method according to any one of claims 1 to 6, wherein the determining (S250) a target matrix combination from the I matrix combinations according to a bandwidth information of a computing unit that performs the matrix multiplication operation and the target splitting information of each of the I matrix combinations comprises:

determining a memory access resource overhead of each of the I matrix combinations according to the bandwidth information of the computing unit that performs the matrix multiplication operation and the target splitting information of each of the I matrix combinations; and
determining the target matrix combination from the I matrix combinations according to the memory access resource overhead of each of the I matrix combinations.

8. The method according to claim 7, wherein the bandwidth information comprises: a storage bandwidth between the computing unit and a storage unit, and at least one cache bandwidth between multi-level cache units,
the determining a memory access resource overhead of each of the I matrix combinations according to the bandwidth information of the computing unit that performs the matrix multiplication operation and the target splitting information of each of the I matrix combinations comprises:

determining a first memory access time resource overhead according to a data volume of the first matrix, a data volume of the second matrix, a data volume of the third matrix and the storage bandwidth;
determining a second memory access time resource overhead according to the target splitting information, a target sub-data volume of the third matrix and the cache bandwidth, wherein the target sub-data volume is a data volume of the third matrix stored in a target cache unit, and the target cache unit is a cache unit in the multi-level cache units except a first cache unit; and
determining the memory access resource overhead of each of the I matrix combinations according to the first memory access time resource overhead and the second memory access time resource overhead.

9. The method according to claim 8, wherein the determining a first memory access time resource overhead according to a data volume of the first matrix, a data volume of the second matrix, a data volume of the third matrix and the storage bandwidth comprises:

determining a total data volume according to the data volume of the first matrix, the data volume of the second matrix and the data volume of the third matrix; and
determining the first memory access time resource overhead according to a ratio between the total data volume and the storage bandwidth.

10. The method according to claim 8, wherein the target splitting information comprises a target splitting parameter value, the determining a second memory access time resource overhead according to the target splitting information, a target sub-data volume of the third matrix and the cache bandwidth comprises:

determining a sub-memory access time resource overhead according to a ratio between the target sub-data volume of the third matrix and the cache bandwidth; and
determining the second memory access time resource overhead according to a product between the sub-memory access time resource overhead and the target splitting parameter value.

11. The method according to any one of claims 1 to 10, further comprising:
performing the matrix multiplication operation according to the first target sub-shape information of the target matrix combination and the second target sub-shape information of the target matrix combination.

12. The method according to any one of claims 1 to 11, wherein the preset memory access resource overhead condition comprises at least one of that:

the memory access resource overhead corresponding to the target matrix combination is less than or equal to a preset memory access resource overhead threshold; or
the memory access resource overhead corresponding to the target matrix combination is the smallest in the I matrix combinations.

13. An electronic device (600), comprising:

at least one processor; and

a memory communicatively connected with the at least one processor;

wherein the memory stores instructions executable by the at least one processor, and the instructions, when executed by the at least one processor, cause the at least one processor to perform the method of any one of claims 1 to 12.

14. A non-transitory computer-readable storage medium storing computer instructions, wherein the computer instructions, when executed by a processor, cause a computer to perform the method of any one of claims 1 to 12.

15. A computer program product comprising a computer program, wherein the computer program, when executed by a processor, implements the method of any one of claims 1 to 12.

FIG. 1

200

| I matrix combinations are determined from a plurality of matrices corresponding to the matrix multiplication operation | S210 |

| A first target sub-shape information of each of the I matrix combinations is determined according to a shape information of the second matrix of each of the I matrix combinations and a capacity of the second storage space of each of the I matrix combinations | S220 |

| A second target sub-shape information of each of the I matrix combinations is determined according to a capacity of the first storage space of each of the I matrix combinations and the first target sub-shape information of each of the I matrix combinations | S230 |

| A target splitting information of each of the I matrix combinations is determined according to the second target sub-shape information of each of the I matrix combinations and a shape information of the first matrix of each of the I matrix combinations | S240 |

| The target matrix combination is determined from the I matrix combinations according to the bandwidth information of the computing unit that performs the matrix multiplication operation and the target splitting information of each of the I matrix combinations | S250 |

FIG. 2

B

320

A

310

C

330

FIG. 3A

FIG. 3B

400

```
┌─────────────────────────────────────┐
│   ┌───────────────────────┐          │
│   │   First determination │ ～ 410   │
│   │        module         │          │
│   └───────────────────────┘          │
│                                      │
│   ┌───────────────────────┐          │
│   │  Second determination │ ～ 420   │
│   │        module         │          │
│   └───────────────────────┘          │
│                                      │
│   ┌───────────────────────┐          │
│   │   Third determination │ ～ 430   │
│   │        module         │          │
│   └───────────────────────┘          │
│                                      │
│   ┌───────────────────────┐          │
│   │  Fourth determination │ ～ 440   │
│   │        module         │          │
│   └───────────────────────┘          │
│                                      │
│   ┌───────────────────────┐          │
│   │   Fifth determination │ ～ 450   │
│   │        module         │          │
│   └───────────────────────┘          │
└─────────────────────────────────────┘
```

FIG. 4

50

```
┌─────────────────────────────────────┐
│                                      │
│   ┌───────────────────────┐          │
│   │ Apparatus for processing│ ～ 500 │
│   │ matrix multiplication data│      │
│   └───────────────────────┘          │
│                                      │
└─────────────────────────────────────┘
```

FIG. 5

FIG. 6